(19) **Europäisches Patentamt**

**European Patent Office**

**Office européen des brevets**

(11) **EP 1 594 203 A1**

(12) **EUROPÄISCHE PATENTANMELDUNG**

(43) Veröffentlichungstag:
    **09.11.2005 Patentblatt 2005/45**

(51) Int Cl.⁷: **H02G 3/30**

(21) Anmeldenummer: **04405740.4**

(22) Anmeldetag: **29.11.2004**

(84) Benannte Vertragsstaaten:
    **AT BE BG CH CY CZ DE DK EE ES FI FR GB GR
    HU IE IS IT LI LU MC NL PL PT RO SE SI SK TR**
    Benannte Erstreckungsstaaten:
    **AL HR LT LV MK YU**

(30) Priorität: **08.05.2004 CH 8092004**

(71) Anmelder: **ZURECON AG**
    **CH-8003 Zürich (CH)**

(72) Erfinder: **Pfluger, Gerd**
    **4625 Oberbuchsiten (CH)**

(74) Vertreter: **Rutz, Peter**
    **Rutz & Partner**
    **Postfach 4627**
    **6304 Zug (CH)**

(54) **Deckenstütze**

(57)    Die Deckenstütze (10), die der Montage einer Kabelführungsvorrichtung (6) dient, ist einerseits mit einer Decke (9) und andererseits mit einem Ausleger (5) verbindbar, auf den die Kabelführungsvorrichtung (6) abgelegt werden kann. Erfindungsgemäss sind zwei miteinander verbindbare identische Vorrichtungteile (1, 1') vorgesehen, von denen das erste mit der Decke (9) und das zweite mit dem Ausleger (5) verbindbar ist, und die in ihrer Gesamtlänge stufenlos höhenverstellbar sind.

Fig. 9

EP 1 594 203 A1

**Beschreibung**

Die Erfindung betrifft eine der Montage von Kabelführungsvorrichtungen dienende Deckenstütze nach dem Oberbegriff des Patentanspruchs 1.

In Gewerbe-, Industrie- und Verwaltungsgebäuden werden Kabel für Stark- und Schwachstromnetze infolge fehlender Eigenstabilität in Kabelführungsvorrichtungen gelegt, und so beispielsweise von einem Schaltfeld zu den Verbrauchern geführt. Kabelführungsvorrichtungen dieser Art sind beispielsweise aus [1], Produktkatalog der LANZ OENSINGEN AG, April 2003, bekannt.

In [1], Seite 10 sind Gitterbahnen, in [1], Seite 18 sind Multibahnen und in [1], Seite 34 sind Weitspann-Multibahnen gezeigt, die je nach der Art und Menge der zu verlegenden

Kabel und der vorliegenden Gebäudeverhältnisse zur Anwendung kommen.

Das für die genannten Kabelführungsvorrichtungen dienende Trägermaterial zur Montage an Decken besteht normalerweise aus einer so genannten Deckenstütze, mit der ein Ausleger verbindbar ist. Auf den mit der Deckenstütze verbundenen Ausleger, der jeweils waagrecht ausgerichtet ist, werden die Kabelführungsvorrichtungen abgelegt, wie dies in [1] gezeigt ist.

Die aus [1] bekannte, normalerweise aus Stahl verzinkt oder Stahl rostfrei bestehende Deckenstütze weist eine mit der Decke verschraubbare Platte auf, die mit einem meist gelochten, stab- oder rohrförmigen Profilteil verschweisst oder verschraubt ist.

Nach der Montage der Deckenstütze kann der Ausleger auf passender Höhe mit einer Seitenwand des beispielsweise U-förmigen Profilteils verschraubt, oder darin eingehängt werden.

Deckenstützen dieser Art haben verschiedene Nachteile.

Durch das Verschrauben oder Verschweissen der einzelnen Teile entsteht ein hoher Herstellungsaufwand.

Aufgrund des Verschweissen oder der Verwendung von Verbindungselementen, Schrauben etc., resultiert zudem eine erhöhte Oxydationsanfälligkeit von installierten Systemen.

Gefertigte Deckenstützen sind nicht stapelbar, weshalb jeweils ein grosses Volumen für den Transport und die Lagerung der Deckenstützen und grössere Lager- und Transportbehälter zu reservieren sind.

Wesentlich ist, dass durch eine montierte Deckenstütze Kräfte von der Kabelführungsvorrichtung auf die Decke zu übertragen sind, was heisst, dass an zwei Stellen der Deckenstütze die Einleitung von Kräften und Momenten erfolgt, die zueinander korrespondieren. Die Stellen, an denen Kräfte und Momente auf die Deckenstützen einwirken, sind jedoch unterschiedlich ausgestaltet, weshalb unerwünschte Effekte auftreten können. An der Stelle, an der ein Ausleger beispielsweise mit einer Seitenwand eines Profilteils verbunden wird, entstehen Krafteinwirkungen und Momente, welche Verbiegungen der Seitenwand verursachen können, falls diese nicht entsprechend solide dimensioniert ist. Sofern entsprechende Probleme vermieden werden sollen, sind deshalb alle Bereiche der Deckenstütze, an denen Ausleger befestigt werden können, entsprechend solide zu dimensionieren, woraus ein erhöhter Materialaufwand und ein höheres Gesamtgewicht der Deckenstützen resultiert.

Je nach Montage der Ausleger liegt oft ein kleineres oder grösseres Teil der Deckenstütze bzw. des Profilteils frei und ragt unterhalb der montierten Kabelführungsbahn in den Gebäuderaum hinein. Dies hinterlässt einerseits einen ungünstigen ästhetischen Eindruck, und birgt andererseits Verletzungsgefahren.

Zu beachten ist weiterhin der relativ hohe Zeitaufwand zur Montage der Ausleger.

Der vorliegenden Erfindung liegt daher die Aufgabe zugrunde, eine verbesserte Deckenstütze zu schaffen.

Insbesondere ist eine Deckenstütze zu schaffen,

a) die mit geringem Kostenaufwand herstellbar und einfach montierbar ist,

b) die aus wenig Teilen gefertigt werden kann,

c) die hinsichtlich Oxydationserscheinungen weniger anfällig ist,

d) die stapelbar ist und daher geringere Lager- und Transportkosten verursacht,

e) die an den Stellen der Krafteinleitung mit geringem Aufwand verstärkt dimensioniert werden kann,

f) deren Ausleger oder Konsolen rasch, stabil und mit geringem Aufwand montierbar sind,

g) die nach der Montage stets einen einwandfreien ästhetischen Eindruck hinterlassen und

h) die aus dünnem, verzinktem oder rostfreiem Blech gefertigt werden kann, ohne dass später störende Oxydationserscheinungen auftreten.

Diese Aufgaben werden mit einer Deckenstütze gelöst, welche die in Anspruch 1 angegebenen Merkmale aufweist. Vorteilhafte Ausgestaltungen der Erfindung sind in weiteren Ansprüchen angegeben.

Die Deckenstütze, die der Montage einer Kabelführungsvorrichtung dient, ist einerseits mit einer Decke und andererseits mit einem Ausleger verbindbar, auf den die Kabelführungsvorrichtung abgelegt werden kann. Erfindungsgemäss sind nötigenfalls miteinander verbindbare, im Prinzip identische Vorrichtungsteile vorgesehen, die mit der Decke und mit dem Ausleger verbindbar sind.

Die auf die Decke, und die von der Kabelführungsvorrichtung auf die Deckenstütze einwirkenden Kräfte werden daher je dem zugehörigen Vorrichtungsteil zugeführt, welches ein mit der Decke verbindbares Endteil, und im weitern ein Verbindungsteil aufweist, das derart mit Öffnungen für die Durchführung von Verbindungsschrauben versehen ist, dass je zwei gegeneinander gerichtete, ineinander gelegte und wahlweise entsprechend dem Abstand der Öffnungen gegeneinander verschobene Verbindungsteile in einem beliebig gewählten Abstand miteinander verbindbar sind. Die Höhenverschiebung des Auslegers erfolgt durch die gegenseitige Verschiebung der beiden Vorrichtungsteile, weshalb der Ausleger immer am unteren Ende der Dekkenstütze angeordnet ist und bleibt. Der Ausleger und die gehaltene Kabelführungsvorrichtung werden daher nicht von Teilen der Deckenstütze nach unten überragt, was ästhetisch oder hinsichtlich der Gebäudesicherheit ungünstig sein könnte.

Das Verbindungsteil weist wenigstens zwei gegeneinander geneigte plattenförmige Elemente auf, von denen wenigstens eines mit den Öffnungen zur Durchführung der Verbindungsschrauben versehen ist, und von denen zumindest eines eine zur Durchführung des Auslegers vorgesehene, an das Endteil angrenzende, geschlossene oder gegen das Endteil offene Fensteröffnung aufweist.

Das Endteil jedes Vorrichtungsteils der Dekkenstütze dient so der Übertragung der auf die Decke, oder der Aufnahme der auf den Ausleger einwirkenden Kräfte. Durch entsprechende Dimensionierung und Ausgestaltung, gegebenenfalls durch Verstärkung der Endteile, kann die Krafteinleitung an diesen zwei Stellen mit geringem Aufwand beherrscht werden. Die Verbindungsteile, die direkt oder durch ein Mittelteil miteinander verbunden werden, dienen hingegen dem Transfer von Kräften, die achsparallel auf diese Übertragen werden. Die Verbindungsteile werden nur auf Zug oder Druck belastet, so dass sie entsprechend vorteilhaft dimensioniert werden können.

Sofern zwei der plattenförmigen Elemente des Verbindungsteils mit Öffnungen zur Durchführung der Verbindungsschrauben versehen sind, so werden diese vorzugsweise quer zueinander verlaufend angeordnet, so dass eine Durchführung der Verbindungsschrauben durch zwei miteinander zu verbindende plattenförmige Elemente auch dann möglich ist, wenn diese nicht präzise zueinander ausgerichtet sind.

In einer vorzugsweisen Ausgestaltung weist jedes Endteil ein plattenförmiges Element mit wenigstens einer der Durchführung einer Montageschraube dienenden Öffnung sowie Flügelteile auf, die um etwa 90° gegenüber dem plattenförmigen Element abgewinkelt und beispielsweise mittels Nieten, Fügen, Toxen oder Schweissen mit den entsprechenden plattenförmigen Elementen des Verbindungsteils verbunden sind.

Wenigstens eines der Flügelteile weist eine der Durchführung des Auslegers dienende Fensteröffnung auf, die nach der Montage etwa konzentrisch zur entsprechenden Fensteröffnung des Verbindungsteils liegt.

In einer weiteren vorzugsweisen Ausgestaltung sind das Endteil und das Verbindungsteil aus einem Stück gefertigt, wobei sich die Anzahl der anzubringenden Verbindungsstellen reduziert.

Der vorzugsweise arretierbare Ausleger, der beispielsweise als stab- oder rohrförmiges Profilteil ausgebildet ist, kann einseitig oder beidseitig aus der Dekkenstütze herausragen, so dass die Deckenstütze einseitig oder beidseitig eine Kabelführungsvorrichtung tragen kann. Möglich ist auch die Verwendung von mehreren Auslegern übereinander, für die entsprechende Fensteröffnungen vorzusehen sind. Sofern nur eine Fensteröffnung vorgesehen ist, in die der Ausleger eingeführt wird, so ist dieser zusätzlich, beispielsweise mittels einer Schraube zu fixieren. Möglich ist ferner die Verwendung von zwei Deckenstützen, die auf einfach Weise mittels einer Traverse miteinander verbindbar sind.

Das Endteil und das Verbindungsteil, dessen plattenförmige Elemente einen Winkel einschliessen, der vorzugsweise kleiner als 120° ist, liegen bündig aneinander, so dass die Vorrichtungsteile derart stapelbar sind, dass sie nur Raum entsprechend ihrem Massevolumen in Anspruch nehmen, das aufgrund der vorteilhaften Konstruktion vergleichsweise gering ist. Die vorteilhafte Ausgestaltung der erfindungsgemässen Deckenstütze erlaubt nämlich die Verwendung relativ dünner Bleche von 1 mm -2.5 mm. Die ist nicht nur in Hinsicht auf das Gewicht und die Materialkosten, sondern auch in Hinsicht auf das Fertigungsverfahren besonders vorteilhaft. Sofern für das Endteil und das Verbindungsteil verzinktes Blech mit einer Materialstärke von 1 mm - 2.5 mm verwendet wird, kann dieses bearbeitet werden, ohne dass störende Beeinträchtigungen der Zinkschicht erfolgen. Eine Nachbehandlung der gefertigten Vorrichtungsteile ist daher nicht notwendig. Sofern gewünscht, können die Vorrichtungsteile trotzdem mit weiteren Slchutzschichten versehen werden.

In weiteren vorzugsweisen Ausgestaltungen der Deckenstütze gelingt es, die auf diese einwirkenden Kräfte deutlich zu reduzieren und die einwirkenden Drehmomente praktisch aufzuheben, so dass die Dekkenstütze einfacher ausgestaltet, kostengünstiger hergestellt und mit nur einer Montageschraube einfacher montiert werden kann.

Nachfolgend wird die Erfindung, einschliesslich weiterer vorzugsweiser Ausgestaltungen, anhand von Zeichnungen näher erläutert. Dabei zeigt:

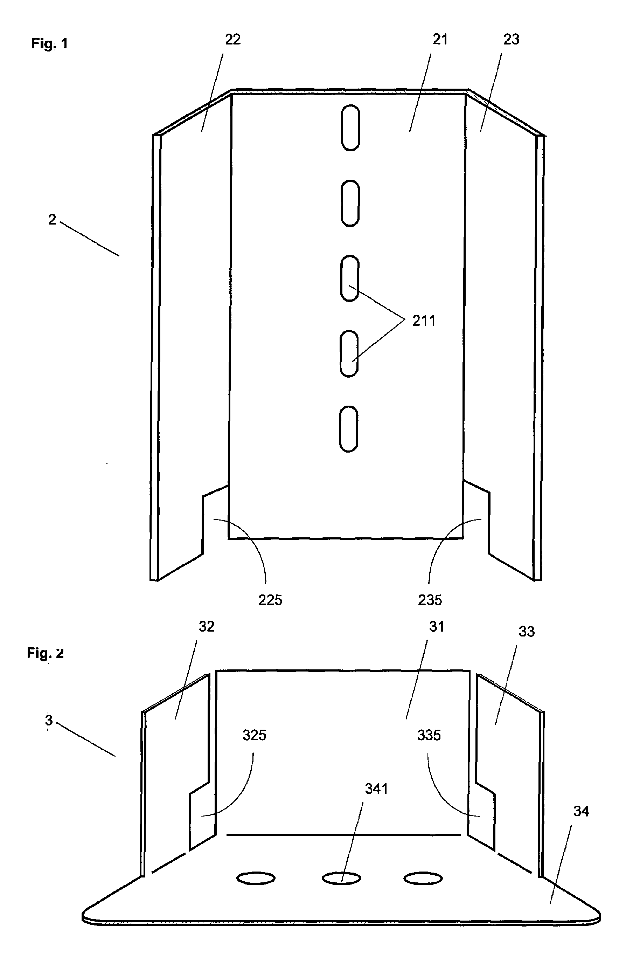

Figur 1      ein aus drei gegeneinander geneigten, plattenförmigen Elementen 21, 22, 23 bestehendes und mit Öffnungen 211 zur Durchführung von Verbindungsschrauben versehenes Verbindungsteil 2;

| Figur 2 | ein mit Flügelelementen 31, 32, 33 versehenes Endteil 3 mit einem zentralen plattenförmigen Element 34, das mit Öffnungen 241 zur Durchführung von Montageschrauben versehen ist; |

| Figur 3 | ein Vorrichtungsteil 1, das aus dem Verbindungsteil 2 von Figur 1 und dem Endteil 3 von Figur 2 besteht; |

| Figur 4 | eine erfindungsgemässe Deckenstütze 10 während der Montage, mit einem ersten Vorrichtungsteil 1', das an der Decke 9 montiert wird, und einem gegebenenfalls anhand eines Mittelteils 4 damit zu verbindenden zweiten Vorrichtungsteil 1, in das ein Ausleger 5 eingeschoben wird; |

| Figur 5 | die Deckenstütze 10 von Figur 4 mit der Durchführung von Verbindungsschrauben dienenden länglichen Öffnungen 221, 221'; 231, 231' die quer zueinander verlaufend an entsprechenden Seitenelementen 22, 23; 22', 23' der Verbindungsteile 2, 2' angeordnet sind; |

| Figur 6 | in Schnittdarstellung zwei miteinander verbundene Verbindungsteile 2 ,2' mit um 30° gegeneinander abgewinkelten Seitenelementen 22, 23' bzw. 22', 23 und paarweise quer zueinander verlaufend angeordneten Öffnungen 221, 231'; 221', 231; |

| Figur 7 | in Schnittdarstellung zwei miteinander verbundene Verbindungsteile 2 ,2' mit um 45° gegeneinander abgewinkelten Seitenelementen 22, 23' bzw. 22', 23 und paarweise quer zueinander verlaufend angeordneten Öffnungen 221, 231'; 221', 231; |

| Figur 8 | übereinander liegende und quer zueinander verlaufend angeordnete Öffnungen 221, 231', in die eine Verbindungsschraube 81 eingesetzt ist; |

| Figur 9 | die Deckenstütze 10 von Figur 5 nach Abschluss der Installation mit einer auf dem Ausleger 5 abgelegten Kabelführungsvorrichtung 6, sowie einer Konterplatte 340; |

| Figur 10 | ein Vorrichtungsteil 1 von der Seite gesehen, mit bündig aneinander liegendem Verbindungsteil 2 und Endteil 3; |

| Figur 11 | vier gestapelte Vorrichtungsteile 1 von der Seite gesehen; |

| Figur 12 | sieben gestapelte Vorrichtungsteile 1 von |

vorn gesehen;

| Figur 13 | ein aus einem Stück 230 gefertigtes Vorrichtungsteil 1; |

| Figur 14 | eine montierte Deckenstütze 10 von unten gesehen, mit Verbindungsteilen 2 ,2', die die Form eines W aufweisen und die seitlich geschnitten gezeigt sind; |

| Figur 15 | eine mit einem ersten, der Drehmomentkompensation dienenden Montageprofil 500 versehene Deckenstütze 10; |

| Figur 16 | eine mit einem zweiten, der Drehmomentkompensation dienenden Montageprofil 550 versehene Deckenstütze 10; |

| Figur 17 | einen ersten Schnitt durch eine weitere, in Figur 19 gezeigte Deckenstütze 10; |

| Figur 18 | einen zweiten Schnitt durch die in Figur 19 gezeigte Deckenstütze 10; und |

| Figur 19 | die in den Figuren 17 und 18 in Schnittdarstellungen gezeigte Deckenstütze 10. |

Figur 1 zeigt ein zur Fertigung einer Deckenstütze 10 vorgesehenes Verbindungsteil 1, das aus drei gegeneinander geneigten plattenförmigen Elementen 21, 22, 23, einem Mittelelement 21 und zwei Seitenelementen 22, 23 besteht. Die beiden Seitenelemente 22, 23, an deren Unterseite zwei der Durchführung eines Auslegers 5 (siehe Figur 3) dienende Fensteröffnungen 225, 235 vorgesehen sind, sind gegenüber dem Mittelelement 21, das Öffnungen 211 zur Durchführung einer Verbindungsschraube 81 (siehe Figur 4) aufweist, um etwa 60° gegeneinander geneigt, so dass ein stark geöffnetes U-Profil gebildet wird.

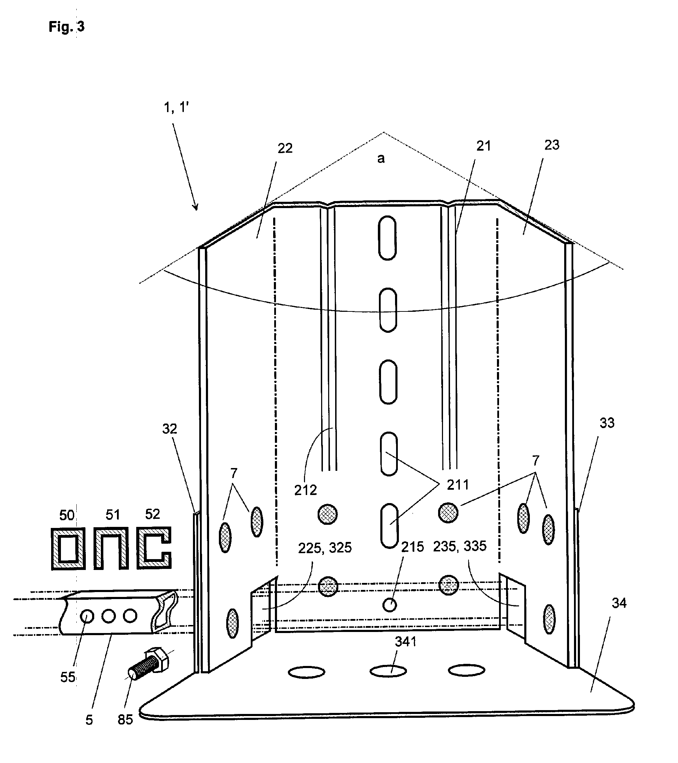

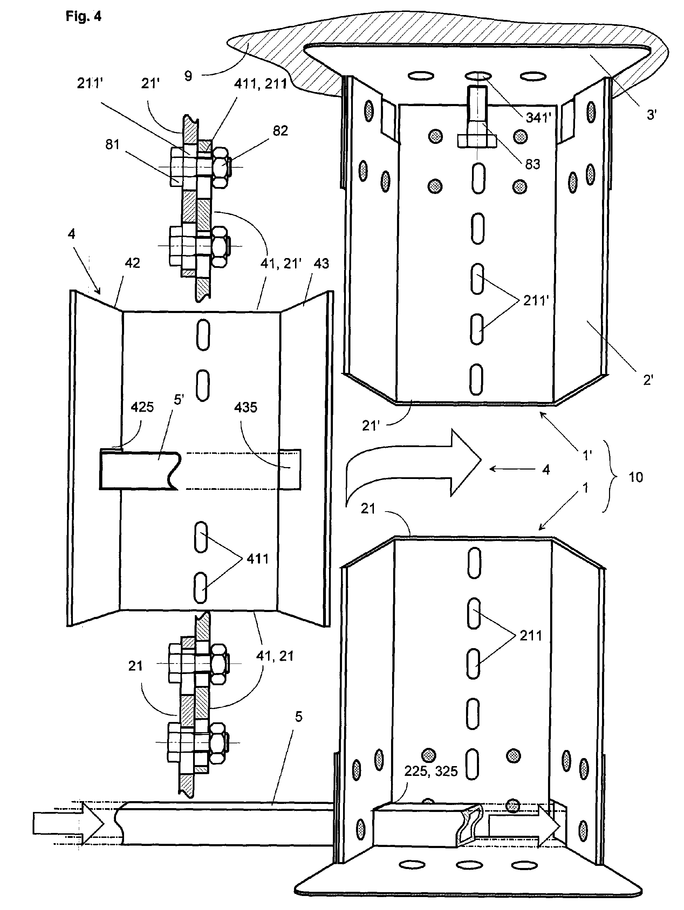

Figur 2 zeigt ein Endteil 3 mit einem plattenförmige Element 34, das Öffnungen 341 zur Durchführung von Montageschrauben 83 (siehe Figur 4) aufweist, und mit drei Flügelteilen 31, 32, 33, die um etwa 90° gegenüber dem plattenförmigen Element 34 nach oben abgewinkelt sind. Die beiden seitlich angeordneten Flügelteile 32, 33 weisen Fensteröffnungen 325, 335 auf, die zu den Fensteröffnungen 225, 235 des Verbindungsteils 1 von Figur 1 korrespondieren (siehe Figur 3).

Figur 3 zeigt ein Vorrichtungsteil 1, das aus dem Verbindungsteil 2 von Figur 1 und dem Endteil 3 von Figur 2 besteht, die durch Verbindungsstellen, vorzugsweise mittels Niet-, Füge- oder Toxverbindungen 7, gegebenenfalls auch mittels Schweissverbindungen, miteinander verbunden sind. Die Flügelteile 31, 32, 33 sind ausserhalb der Elemente 21, 22, 23 und anliegend an diesen vorgesehen, so dass eine vorteilhaftere Belastung der Verbindungen 7 resultiert.

Betreffend der Fertigung von Toxverbindungen siehe beispielsweise die TOX®-Blechverbindungssysteme der TOX® PRESSOTECHNIK GmbH & Co. KG, D-88250 Weingarten.

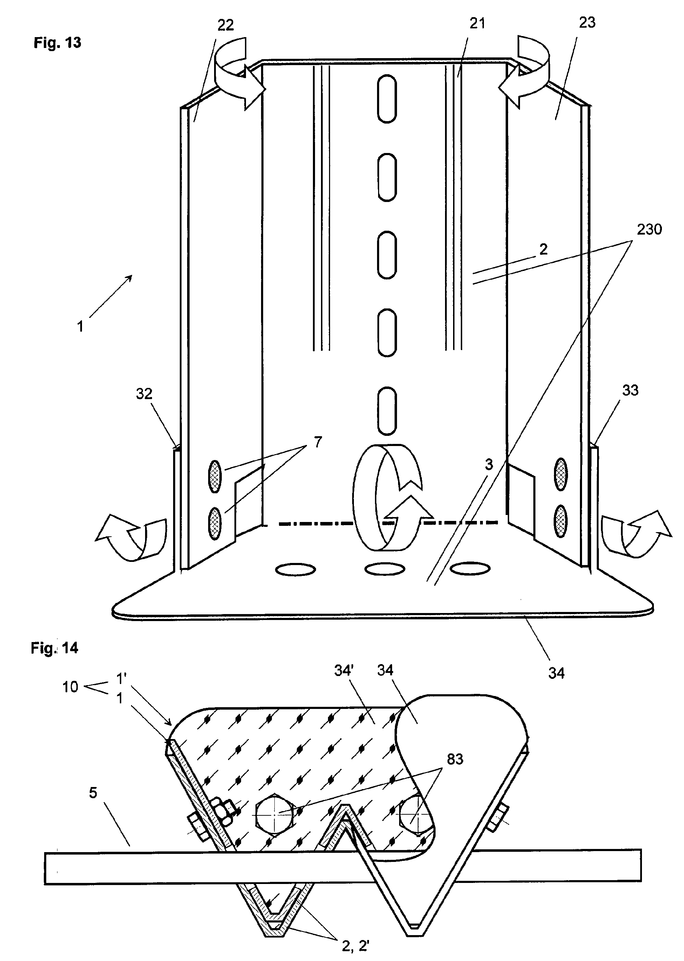

Zur Verstärkung des Verbindungsteils 2 ist dieses mit achsparallel verlaufenden Sicken 212 versehen, durch die eine erhöhte Steifigkeit erzielt wird. Weitere Verstärkungen an den Zonen, an denen äussere Kräfte auf das Vorrichtungsteil 1 einwirken, werden nachstehend erläutert. Sofern das Vorrichtungsteil 1 aus einem Stück gefertigt wird (siehe Figur 13), so entfallen die Toxverbindungen am Mittelelement 21 des Verbindungsteils 2, da dieses mit dem Endteil 3 einstückig verbunden ist. Lediglich die am Endteil 3 seitlich angeordneten Flügelelemente 32, 33 sind mittels Toxverbindungen 7 mit den Seitenelementen 22, 23 des Verbindungsteils 2 verbunden, die einen Winkel a von etwa 60° einschliessen. Durch eine einstückige Fertigung kann unter Einsparung entsprechender Verbindungen ebenfalls eine hohe Belastbarkeit des Vorrichtungsteils 1 erzielt werden.

In Figur 3 sind ferner die übereinander liegenden Fensteröffnungen 225, 325 und 235, 335 gezeigt, in die von der Seite ein Ausleger 5 eingeschoben wird, der beispielsweise ein Rahmenprofil 50, ein U-Profil 51 oder ein C-Profil 52 aufweist. Zudem ist der Ausleger 5 vorzugsweise mit Öffnungen 55 versehen, in die eine der Arretierung des Auslegers 5 dienende Schraube 85 eindrehbar ist, die beispielsweise durch eine Öffnung 215 im Mittelelement 21 des Verbindungsteils 2 führbar ist. Weitere Möglichkeiten zur Arretierung des Auslegers 5, beispielsweise unter Verwendung von Keilen oder Stiften, sind in fachmännischer Weise realisierbar.

Figur 4 zeigt eine erfindungsgemässe Deckenstütze 10 während der Montage, mit einem ersten Vorrichtungsteil 1', das mittels einer Montageschraube 83 und eines Dübels an der Decke 9 montiert wird, und mit einem damit zu verbindenden zweiten Vorrichtungsteil 1, in das ein Ausleger 5 eingeschoben wird. Dabei ist ersichtlich, dass die beiden Vorrichtungsteile 1, 1' völlig identisch und daher gegeneinander austauschbar sind. Die beiden Vorrichtungsteile 1, 1' können dabei direkt miteinander verschraubt oder mittels eines Mittelteils 4 miteinander verbunden werden, das ebenfalls ein mit Öffnungen 411 versehenes mittleres plattenförmiges Element 41 aufweist, das mit abgewinkelten Seitenelementen 42, 43 versehen ist, die Fensteröffnungen 425, 435 zur Durchführung eines weiteren Auslegers 5' aufweisen können. In Seitenschnitten sind ferner die durch die Öffnungen 211, 211' bzw. 211, 411 und 211', 411 geführten Verbindungsschrauben 81 gezeigt, die mittels Schraubenmuttern 82 festgezogen sind.

Aus Figur 4 ist ferner ersichtlich, dass bereits durch das Vorrichtungsteil 1' und das Mittelteils 4 eine dem Halten des Auslegers 5' dienende Deckenstütze gebildet werden kann. Beispielsweise kann ein Mittelteil 4 vorgesehen werden dessen Fensteröffnungen 425, 435 nahe der Unterkante des Mittelteils 4 vorgesehen sind.

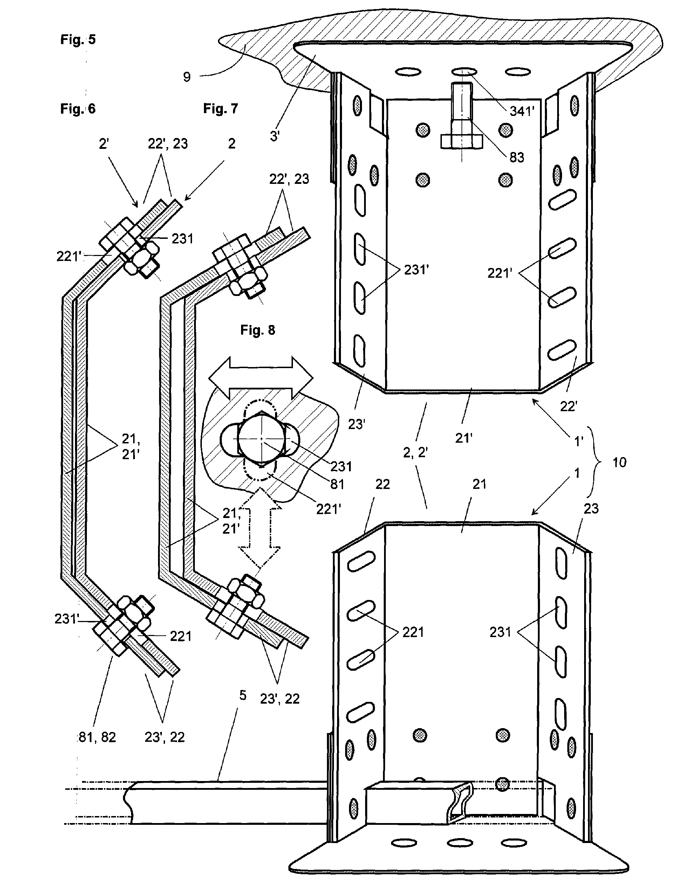

Figur 5 zeigt die Deckenstütze 10 von Figur 4 mit der Durchführung von Verbindungsschrauben 81 dienenden länglichen Öffnungen 221, 221'; 231, 231' die quer zueinander verlaufend angeordnet sind, so dass bei der Montage der Deckenstütze 10 je eine längs und eine quer verlaufende Öffnung 221, 231'; 221', 231 übereinander liegen. In den Figuren 6 und 7 ist gezeigt, dass der gegenseitige Abstand der Mittelelemente 21, 21' von der Blechdicke und vom Winkel abhängig ist, um den die Seitenelemente 22, 23; 22', 23' gegenüber dem Mittelelement 21, 21' abgewinkelt sind. Figur 6 zeigt in Schnittdarstellung zwei miteinander verbundene Verbindungsteile 2 ,2' mit um 30° gegeneinander abgewinkelten Seitenelementen 22, 23' bzw. 22', 23 und paarweise quer zueinander verlaufend angeordneten Öffnungen 221, 231'; 221', 231. Figur 7 zeigt in Schnittdarstellung zwei miteinander verbundene Verbindungsteile 2 ,2' mit um 45° gegeneinander abgewinkelten Seitenelementen 22, 23' bzw. 22', 23 und paarweise quer zueinander verlaufend angeordneten Öffnungen 221, 231'; 221', 231. Figur 8 zeigt übereinander liegende und quer zueinander verlaufend angeordnete Öffnungen 221, 231' von oben. Dabei ist ersichtlich, dass die Öffnungen 221, 231'; 221', 231 auch bei grösseren gegenseitigen Verschiebungen der Vorrichtungsteile 1, 1' noch immer übereinander liegen, so dass die Verbindungsschrauben 81 problemlos eingesetzt werden können.

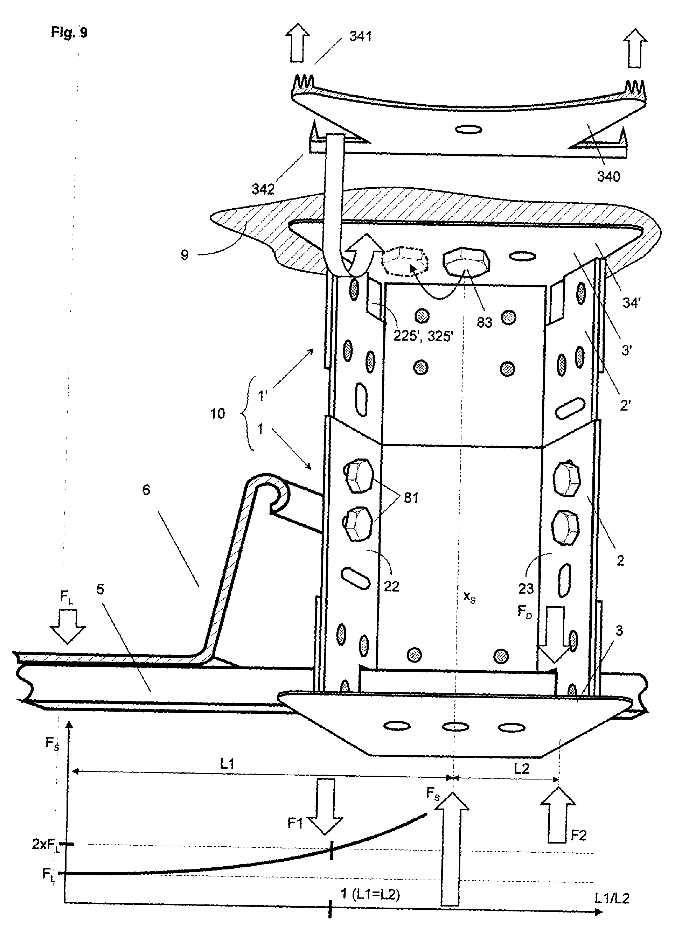

Figur 9 zeigt die Deckenstütze 10 von Figur 5 nach Abschluss der Installation mit einer auf dem Ausleger 5 abgelegten Kabelführungsvorrichtung 6. Es ist ersichtlich, dass die vom Ausleger 5 auf die Deckenstütze übertragenen Kräfte (Zugkraft F1; Druckkraft F2) achsparallel zu den miteinander verbundenen Verbindungsteilen 2, 2' zu dem mit der Decke 9 verbundenen Endteil 3' übertragen werden.

Das Endteil 3' kann bei höheren Belastungen mit einer vorzugsweise federelastischen Konterplatte 340 verstärkt werden, die unter das plattenförmige Element 34' gelegt und mittels der Montageschraube 83 festgezogen wird. Die Konterplatte 340 ist vorzugsweise bombiert bzw. in deren Aussenbereichen derart nach oben gebogen, dass sie das plattenförmige Element 34' des Endteils 3' über die gesamte Fläche fest gegen die Decke 9 drückt. Vorzugsweise überragt die Konterplatte 340 das Endteil 3' und greift mit Krallen 341 in die Decke 9 ein, wodurch ein Drehen der montierten Deckenstütze 10 und ein Lösen der Montageschraube 83 verhindert wird. Vorzugsweise vorgesehene Endstücke 342 der Konterplatte 340 können zudem durch die Fensteröffnungen 225', 325' geführt sein, wodurch ein Eingriff in die Decke 9 an vier Punkten erfolgt. Sofern die Konterplatte 340 mit einer auffälligen Farbe versehen ist, kann deren Vorhandensein bei einer Inspektion der Anlage leicht festgestellt werden.

Aufgrund der vorteilhaften Einleitung und Übertragung der Kräfte in bzw. über die Deckenstütze 10 kann diese aus dünnem Blech hergestellt werden, das bearbeitet werden kann, ohne dass später Oxydationserscheinungen auftreten. Ferner verbessert sich aufgrund der Verwendung von dünnen Blechen die Stapelbarkeit der Deckenstütze 10.

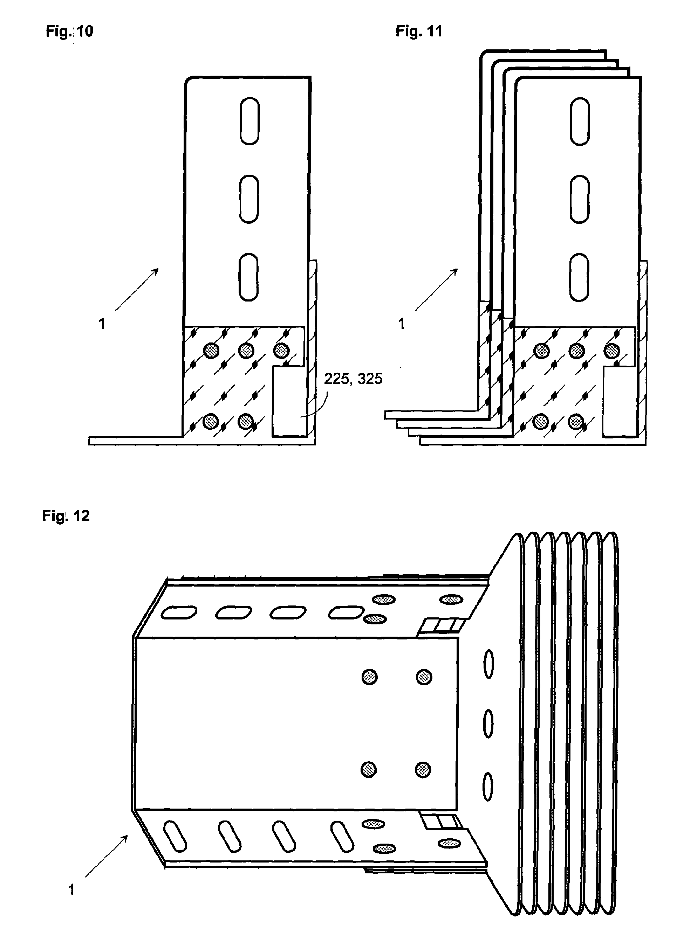

Figur 10 zeigt ein Vorrichtungsteil 1 von der Seite gesehen, mit bündig aneinander liegendem Verbindungsteil 2 und Endteil 3. Vorrichtungsteile 1 können daher ineinander geschoben und auf engem Raum gestapelt werden, wie dies in den Figuren 11 und 12 gezeigt ist.

Figur 13 zeigt ein Vorrichtungsteil 1, das aus einem einzigen Blechstück 230 gefertigt ist. Das beidseitig mit einem Flügelelement 32, 33 versehene Endteil 3 bzw. dessen plattenförmiges Element 34 ist am Mittelelement 21 des Verbindungsteils 2 angeformt und um 90° nach vorn gebogen. Die mit dem plattenförmigen Element 34 verbundenen Flügelelemente 32, 33 sind um 90° nach oben gebogen und mit den daran anliegenden Seitenelementen 22, 23 des Verbindungsteils 2 mittels Toxverbindungen 7 verbunden.

Figur 14 zeigt eine montierte Deckenstütze 10 von unten gesehen, mit Verbindungsteilen 2 ,2', die die Form eines W aufweisen und die seitlich geschnitten gezeigt sind. Durch die gewählte Form der Verbindungsteile 2 ,2' resultieren eine erhöhte Steifigkeit der Deckenstütze 10 und zusätzlich Auflagezonen für den Ausleger 5.

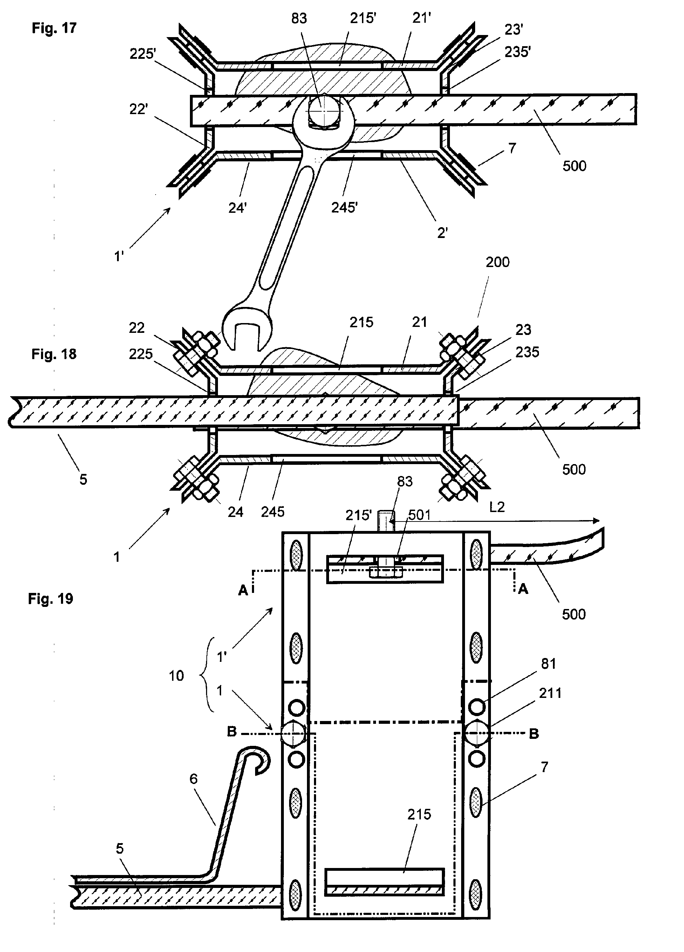

Die Deckenstütze 10 kann unter Berücksichtigung der Erfindungsidee auch in anderer Weise vorteilhaft ausgestaltet werden kann. In den Figuren 17, 18 und 19 ist gezeigt, dass die Deckenstütze 10 bzw. deren Vorrichtungsteile 1, 1' aus vier Seitenteilen 21, 22, 23, 24 bzw. 21', 22', 23', 24' gebildet werden kann, die zu einem Rechteckprofil zusammengefügt werden. Anstelle der Endstücke 3 weisen die Vorrichtungsteile 1, 1' an den zwei einander gegenüber liegenden Seitenteilen 22, 23 Öffnungen 225, 235; 225', 235' auf, die lastseitig der Aufnahme des Auslegers 5 und deckenseitig der Aufnahme eines Montageprofils 500 dienen, das eine Öffnung 501 aufweist, durch die die Montageschraube 83 hindurch führbar ist. In den beiden anderen einander gegenüber liegenden Seitenteilen 21, 24 sind Öffnungen 215, 245 vorgesehen, durch die ein zum Anziehen der Schraube 83 dienendes Werkzeug in das Rechteckprofil einführbar ist.

Die Seitenteile 21, 22, 23, 24; 21', 22', 23', 24' weisen vorzugsweise nach aussen abgewinkelte seitliche Randelemente 200 auf, die aneinander liegen und mittels Schraub- und/oder Toxverbindungen miteinander verbunden sind.

Figur 17 zeigt einen ersten Schnitt A-A durch die in Figur 19 gezeigte Deckenstütze 10, die mittels der Montageschraube 83 an der Decke 9 befestigt wird. Die Montageschraube 83 wird mittels eines Werkzeugs festgezogen, das durch die im Seitenteil 24' dafür vorgesehene Öffnung 245' in das Rechteckprofil der Deckenstütze 10 eingeführt wurde. Das Montageprofil 500 ist durch die Öffnung im aus dem Seitenteil 23' weit nach aussen geführt und stösst in einem Abstand L2 von der Montageschraube 83 an die Decke 9 an. Der Zweck dieser Massnahme wird nachstehend noch im Detail erläutert.

Figur 18 zeigt einen zweiten Schnitt B-B durch die in Figur 19 gezeigte Deckenstütze 10. Daraus ist ersichtlich, dass der dem Tragen einer Last 6 dienende Ausleger 5 durch die Öffnung 225 im Seitenteil 22 nach aussen geführt ist, das dem Seitenteil 23 bzw. 23' gegenüberliegt.

In Figur 9 sind ferner die Kräfte $F_L$, $F_S$ und $F_D$ eingezeichnet, die auf den Ausleger 5 einwirken, der in die nur mit einer Montageschraube 83 befestigte Deckenstütze 10 eingeführt ist. Durch die gehaltene Kabelführungsvorrichtung 6 wird die Kraft $F_L$ in den als Hebel wirkenden Ausleger 5 eingeleitet, der an dem der Kabelführungsvorrichtung 6 zugewandten Seitenelement 22 der Deckenstütze 10 eine Zugkraft F1 und an dem der Kabelführungsvorrichtung 6 abgewandten Seitenelement 23 der Deckenstütze 10 eine Druckkraft F2 einleitet. Dazu korrespondierend wirkt von der Montageschraube 83 eine Zugkraft $F_S$ und von der Decke 9, an der Position des abgewandten Seitenelements 23 eine Druckkraft $F_D$ auf die Deckenstütze 10 ein. In Figur 9 sind ferner die Abstände L1, L2 zwischen den Wirkungslinien der Zugkraft $F_S$, der durch die Last bewirkten Kraft $F_L$ und der von der Decke einwirkenden Druckkraft $F_D$ eingezeichnet. Die von der Montageschraube 83 zu erbringende Zugkraft $F_S$ ist vom Verhältnis L1/L2 der Abstände L1, L2 und der Last $F_L$ wie folgt abhängig:

$$F_S = (L1/L2 + 1) \, F_L$$

Für den Spezialfall L1 = 0 gilt:      $F_S = F_L$

Für den Spezialfall L1 = L2 gilt:      $F_S = 2 \, F_L$

Der Verlauf der Zugkraft $F_S$ in Abhängigkeit der der Abstände L1, L2 und der Last $F_L$ ist in Figur 9 ferner anhand eines Diagramms gezeigt.

Aus diesem Diagramm folgt, dass der Abstand L2, also die Breite der Deckenstütze 10 möglichst gross sein soll, um eine möglichst kleine Zugkraft $F_S$ zu erzielen. Ferner ist es vorteilhaft, die Montageschraube 83 möglichst nahe bei der Last anzuordnen. Durch die vergrösserte Breite der Deckenstütze 10 gelingt es ferner, das einwirkende Drehmoment sicher aufzufangen, wodurch ein einknicken der Deckenstütze 10 vermieden wird.

Hingegen wäre es meist wünschenswert, möglichst schmale und daher kostengünstige Deckenstützen 10 zu installieren. Ferner wäre es wünschenswert, für die Installation der Deckenstütze an der Decke nur eine einzige Montageschraube 83 zu verwenden. Bei der Verwendung nur einer Montageschraube 83 wird diese, wie oben beschrieben mit hohen Zugkräfte $F_S$ belastet, weshalb in der Praxis stets zwei oder mehrere Schrauben verwendet werden. Das Anbringen von zwei Bohrungen für Montageschrauben ist jedoch, wie in der EP 1 428 972 A2 beschrieben, mit hohem Aufwand verbunden.

Der vorliegenden Erfindung liegt daher weiter die Aufgabe zugrunde, eine Deckenstütze zu schaffen, die zum Tragen grösserer Lasten geeignet ist, schmaler ausgestaltet und mit geringerem Aufwand montiert werden kann.

Diese Aufgabe wird mit einer Deckenstütze gelöst, welche die in Anspruch 1 angegebenen Merkmale aufweist. Vorteilhafte Ausgestaltungen der Erfindung sind in weiteren Ansprüchen angegeben.

Diese Aufgaben werden mit einer Deckenstütze gelöst, welche die in Anspruch 16 angegebenen Merkmale aufweist. Vorteilhafte Ausgestaltungen der Erfindung sind in weiteren Ansprüchen angegeben.

Die zur erfindungsgemässen Lösung der genannten Aufgabe geeignete, einseitig an einer Decke montierbare Deckenstütze weist einen der Montage und zum Tragen einer Kabelführungsvorrichtung dienenden Ausleger auf.

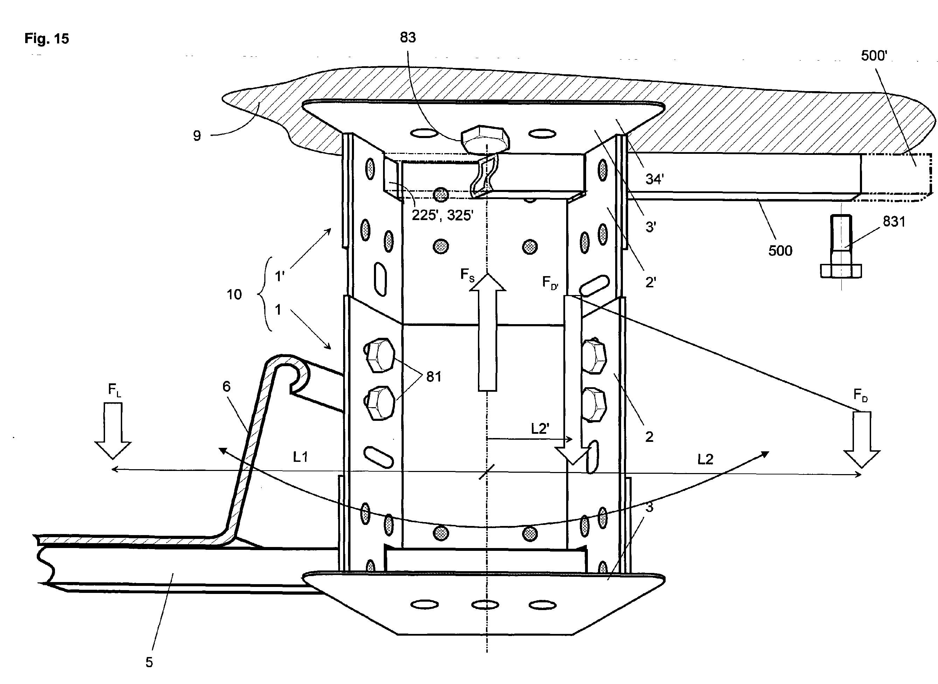

Wie in den Figuren 15 bis 19 gezeigt, ist die erfindungsgemäss mittels nur einer Montageschraube 83 an der Decke 9 montierbare Deckenstütze 10 oder der an einer ersten Seite der Deckenstütze 10 hervortretende Ausleger 5 gegebenenfalls einstückig mit einem Montageprofil 500; 550 verbunden, das nach der Montage der Kabelführungsvorrichtung 6 an einer der ersten Seite gegenüberliegenden zweiten Seite der Deckenstütze 10 in einem zweiten Abstand L2 von der Montageschraube 83 mit einer Kraft $-F_D$ an die Decke 9 andrückt, so dass das auf die Deckenstütze 10 einwirkende Drehmoment $F_L * L1$, das durch die in einem ersten Abstand L1 auf den Ausleger 5 einwirkende Last $F_L$ der Kabelführungsvorrichtung 6 bewirkt wird, durch ein entgegen wirkendes Drehmoment $F_D * L2$ zumindest teilweise kompensiert wird.

Da die Summe der auf den Ausleger 5 einwirkenden Kräfte $F_S$, $F_L$ und $F_D$ stets Null ist, ist es wünschenswert, dass das Montageprofil 500; 550 möglichst lang ist bzw. einen möglichst grossen Abstand L2 überbrückt. Mit grösserem Abstand L2 reduziert sich die Kraft $F_D$ bei konstantem Drehmoment $F_D * L2$ und somit auch die auf die Montageschraube 83 einwirkende Kraft $F_S$.

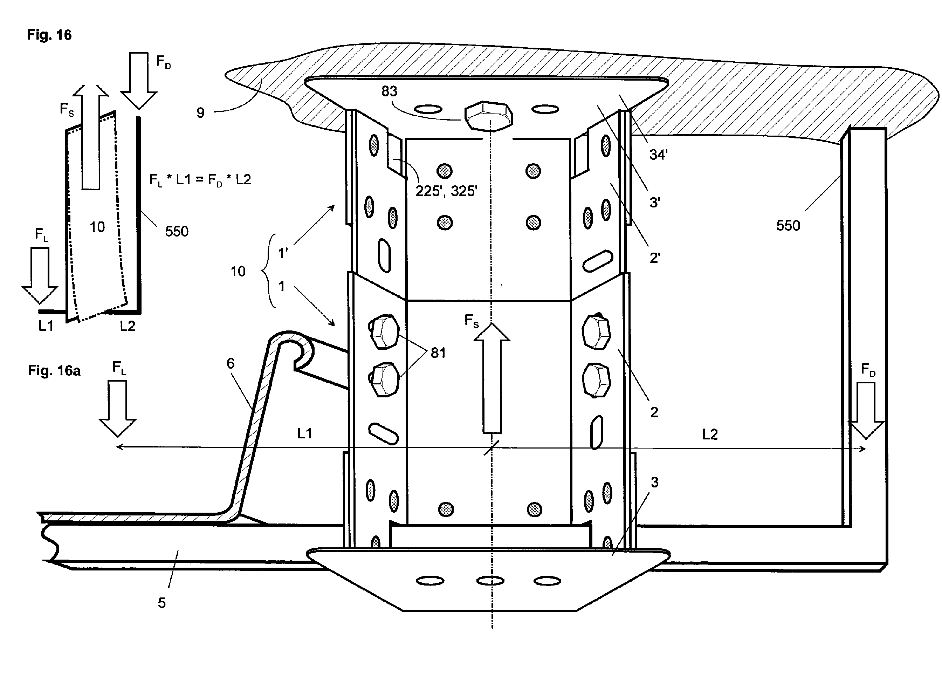

Sofern, wie in Figur 15 und in Figur 19 gezeigt, das gegebenenfalls zum Halten der Montageschraube 83 dienende Montageprofil 500 an einem Ende und der Ausleger 5 am anderen Ende der Deckenstütze 10 gehalten wird, wirken die beiden Drehmomente $F_L * L1$ und $F_D * L2$ auf die Deckenstütze 10 ein, was bei der gezeigten, rechteckprofilförmigen Ausgestaltung der Deckenstütze 10 auch bei der Anwendung grösserer Lasten $F_D$ keine Probleme verursacht. Die Einwirkung von Drehmomenten, $F_L * L1$ und $F_D * L2$, wird jedoch vorzugsweise vermieden. Dies kann, wie in Figur 16 gezeigt, erreicht werden, indem die von der Last verursachte Kraft $F_L$ und die von der Decke 9 ausgeübte Gegenkraft $F_D$, beispielsweise über das gezeigte Profilelement 550, direkt auf den Ausleger 5 einwirken. Da die Einwirkungen von Drehmomente $F_L * L1$ und $F_D * L2$ praktisch vollständig vermieden wird, kann die Deckenstütze 10 im Wesentlichen unter Berücksichtigung der maximal auftretenden Zugkräfte $F_D$ ausgelegt bzw. auf einen Zugstab reduziert werden.

Bei der Verwendung einer starren Deckenstütze 10 und einer unebenen Decke 9 kann es jedoch vorkommen, dass das Montageprofil 500; 550 nicht an die Decke 9 anstösst und somit die erforderliche Gegenkraft $F_D$ nicht aufnehmen und übertragen kann.

Diesem Problem kann verschiedenartig gelöst werden. Einerseits kann das Montageprofil 500 oder 550 an ihrem deckeseitigen Ende mit einer Schraube 831 versehen werden, mittels der ein vorhandener Abstand zur Decke 9 überbrückt wird (siehe Figur 15). Weiterhin kann das Montageprofil 500 oder 550 gegen die Decke 9 gebogen und elastisch ausgestaltet sein, so dass es stets eine genügend hohe Gegenkraft $F_D$ aufnimmt. Möglich ist ferner, die auf Zug belastete Deckenstütze elastisch oder vorzugsweise nur in der Ebene, in der das Montageprofil 500, 550 und der Ausleger 5 liegen, schwenkbar oder gelenkig drehbar auszugestalten, wodurch das mechanisch fest mit dem Ausleger 5 gekoppelte Montageprofil 500 oder 550 um das erforderliche Mass gegen die Decke 9 gedreht wird und sich die resultierenden Drehmomente $F_L * L1$ und $F_D * L2$ vollständig kompensieren (siehe Figur 16a). Die auf Zug belastete Deckenstütze 10 kann daher vorteilhaft mit nur einer Montageschraube 83 an der Decke 9 montiert werden. Die Befestigung mit nur einer Montageschraube 83 ist ferner besonders vorteilhaft, da die Deckenstütze 10 nur an einem Punkt gehalten und daher um diesen Punkt um das erforderliche Mass gedreht werden kann, sofern beispielsweise eine elastische Unterlagsscheibe oder ein entsprechendes elastisches oder deformierbares Element vorgesehen wird. Die mit Montageprofil 500 oder 550 versehene, ein oder mehrteilige Deckenstütze 10 kann daher beliebig ausgestaltet werden. Insbesondere können der Ausleger 5 und das Montageprofil 500 oder 550 verschiedenartig montiert und gegebenenfalls einstückig gefertigt oder miteinander verbunden werden. Der Ausleger 5 und das Montageprofil 500 oder 550 können beispielsweise durch zwei Öffnungen der Deckenstütze 10 hindurch oder nur in eine Öffnung eingeführt und arretiert werden. In vorzugsweisen Ausgestaltungen ist der Ausleger 5 und/oder das Montageprofil 500, 500' oder 550 vorzugsweise teleskopisch verlängerbar, so dass Anpassungen an die Last und Einstellungen der Krafteinwirkung problemlos möglich sind (siehe Figur 15).

**Patentansprüche**

1. Die Deckenstütze (10), die der Montage einer Kabelführungsvorrichtung (6) dient, ist einerseits mit einer Decke (9) und andererseits mit einem Ausleger (5) verbindbar, auf den die Kabelführungsvorrichtung (6) abgelegt werden kann, **dadurch gekennzeichnet, dass** zwei miteinander verbindbare identische Vorrichtungsteile (1, 1') vorgesehen sind, von denen das erste mit der Decke (9) und das zweite mit dem Ausleger (5) verbindbar ist.

2. Deckenstütze (10) nach Anspruch 1, **dadurch gekennzeichnet, dass** die beiden Vorrichtungsteile (1, 1') ein mit der Decke (9) verbindbares Endteil (3; 3') und ein Verbindungsteil (2; 2') aufweisen, das derart mit der Durchführung von Verbindungsschrauben (81) dienenden Öffnungen (211, 211' bzw. 221, 231; 221', 231') versehen ist, dass je zwei gegeneinander gerichtete, ineinander gelegte und wahlweise entsprechend dem Abstand der Öffnungen (211, 211' bzw. 221, 231; 221', 231') gegeneinander verschobene Verbindungsteile (2, 2') in einem gewählten Abstand miteinander verbindbar sind.

3. Deckenstütze (10) nach Anspruch 2, **dadurch gekennzeichnet, dass** die Verbindungsteile (2, 2') wenigstens zwei gegeneinander geneigte plattenförmige Elemente (21, 22, 23; 21', 22', 23') aufweisen, von denen wenigstens eines mit den Öffnungen (211, 211' bzw. 221, 231; 221', 231') versehen ist, und von denen zumindest eines eine geschlossene oder gegen das Endteil (3; 3') offene Fensteröffnung (225, 235; 225' 235') zur Durchführung des Auslegers (5) aufweist.

4. Deckenstütze (10) nach Anspruch 3, **dadurch gekennzeichnet, dass** eines der plattenförmigen Elemente (22, 22') längs in einer Richtung verlaufende Öffnungen (221, 221') und das andere plattenförmige Element (23, 23') quer dazu verlaufende Öffnungen (231, 231') aufweist.

5. Deckenstütze (10) nach Anspruch 2, 3, oder 4, **dadurch gekennzeichnet, dass** die Verbindungsteile (2, 2') mittels eines mit entsprechenden Öffnungen (411) versehenen Mittelteils (4) verbunden sind, dessen plattenförmige Elemente (41, 42, 43) entsprechend den plattenförmigen Elementen (22, 23; 22', 23') der Verbindungsteile (2, 2') ausgestaltet und vorzugsweise mit paarweise angeordneten Öffnungen (425, 435) zur Durchführung wenigstens eines Auslegers (5) versehen sind.

6. Deckenstütze (10) nach einem der Ansprüche 2 bis 5, **dadurch gekennzeichnet, dass** die Endteile (3; 3') ein plattenförmiges Element (34) wenigstens eine der Durchführung einer Montageschraube (83) dienende Öffnung (341) und Flügelteile (31, 32, 33; 31', 32', 33') aufweist, die um etwa 90° gegenüber dem plattenförmigen Element (34) abgewinkelt und mittels Toxen oder Schweissen mit den entsprechenden plattenförmigen Elementen (21, 22, 23; 21', 22', 23') der Verbindungsteile (2, 2') verbunden sind.

7. Deckenstütze (10) nach Anspruch 6, **dadurch gekennzeichnet, dass** wenigstens eines der Flügelteile (32, 33; 32', 33') eine Fensteröffnung (325, 335; 325', 335') zur Durchführung des Auslegers (5) aufweist, die nach der Montage etwa konzentrisch zu der entsprechenden Fensteröffnung (225, 235; 225' 235') des zugehörigen Verbindungsteils (2, 2') liegt.

8. Deckenstütze (10) nach einem der Ansprüche 2 bis 7, **dadurch gekennzeichnet, dass** das Endteil (3; 3') und das Verbindungsteil (2; 2') aus einem Stück (230) gefertigt sind.

9. Deckenstütze (10) nach einem der Ansprüche 1 bis 8, **dadurch gekennzeichnet, dass** der wenigstens eine Ausleger (5), der vorzugsweise als stab- oder rohrförmiges Profilteil ausgebildet ist, einseitig oder beidseitig aus der Deckenstütze (10) herausragt und/oder dass der Ausleger (5) mittels eines Befestigungsmittels (84) arretiert ist.

10. Deckenstütze (10) nach einem der Ansprüche 1 bis 9, **dadurch gekennzeichnet, dass** das Endteil (3; 3') und das Verbindungsteil (2; 2'), dessen plattenförmige Elemente (21, 22, 23; 21', 22', 23') einen Winkel (a) einschliessen, der vorzugsweise kleiner als 120° ist, bündig aneinander anliegen, so dass die Vorrichtungsteile (1, 1') derart stapelbar sind, dass sie nur Raum entsprechend ihrem Massevolumen in Anspruch nehmen.

11. Deckenstütze (10) nach einem der Ansprüche 1 bis 10, **dadurch gekennzeichnet, dass** die Stellen, wie das plattenförmige Element (341) des Endteils (3, 3') oder die Rahmen der Fensteröffnungen (225, 235; 225' 235'; 325, 335; 325', 335') mittels Verstärkungselementen verstärkt sind.

12. Deckenstütze (10) nach einem der Ansprüche 1 bis 11, **dadurch gekennzeichnet, dass** das Endteil (3; 3') und das Verbindungsteil (2; 2') aus verzinktem Blech gefertigt sind, das eine Materialstärke von 1 mm -2.5 mm aufweist.

13. Deckenstütze (10) nach einem der Ansprüche 1 bis 12, **dadurch gekennzeichnet, dass** eine vorzugsweise federelastische und mit in die Decke (9) eingreifenden Krallen (341) versehene Konterplatte (340) unter das mit der Decke (9) verbundene Endteil (3') gelegt und zusammen mit dieser von der Montageschraube (83) gehalten ist.

14. Deckenstütze (10) nach Anspruch 1, **dadurch ge-**

**kennzeichnet, dass** die beiden fest miteinander verbundenen oder miteinander verbindbaren Vorrichtungsteile (1, 1') aus vier ein Rechteckprofil bildenden Seitenteilen (21, 22, 23, 24) bestehen und an zwei einander gegenüber liegenden Seitenteilen (21, 23; 22, 24) mit Öffnungen (225, 235; 225', 235') versehen sind, die lastseitig der Aufnahme des Auslegers (5) und deckenseitig der Aufnahme eines Montageprofils (500) dienen, das eine Öffnung (501) aufweist, durch die die wenigstens eine Montageschraube (83) hindurch führbar ist und dass in wenigstens einem der Seitenteilen (21; ...; 24) vorzugsweise deckenseitig und lastseitig wenigstens eine Öffnung (215', 245') vorgesehen ist, durch die ein zum Anziehen der Schraube (83) dienendes Werkzeug in das Rechteckprofil einführbar ist.

15. Deckenstütze (10) nach Anspruch 14, **dadurch gekennzeichnet, dass** die Seitenteile (21, 22, 23, 24; 21', 22', 23', 24') nach aussen abgewinkelte seitliche Randelemente (200) aufweisen, die aneinander liegen und mittels Schrauben und/oder Toxen miteinander verbunden sind.

16. Deckenstütze (10) mit einem der Montage und zum Tragen einer Kabelführungsvorrichtung (6) dienenden Ausleger (5), die einseitig an einer Decke (9) montierbar ist, insbesondere nach einem der Ansprüche 1 bis 15 **dadurch gekennzeichnet, dass** die mittels nur einer Montageschraube (83) an der Decke (9) montierbare Deckenstütze (10) oder der an einer ersten Seite der Deckenstütze (10) hervortretende Ausleger (5) mit einem Montageprofil (500; 550) verbunden sind, das nach der Montage der Kabelführungsvorrichtung (6) an einer der ersten Seite gegenüberliegenden zweiten Seite der Deckenstütze (10) in einem zweiten Abstand (L2) von der Montageschraube (83) mit einer Kraft ($-F_D$) an die Decke (9) andrückt, dass das auf die Deckenstütze (10) einwirkende Drehmoment ($F_L$ * L1), das durch die in einem ersten Abstand (L1) auf den Ausleger (5) einwirkende Last ($F_L$) der Kabelführungsvorrichtung (6) bewirkt wird, durch ein entgegen wirkendes Drehmoment ($-F_D$ * L2) zumindest teilweise kompensiert wird.

17. Deckenstütze (10) nach Anspruch 16, **dadurch gekennzeichnet, dass** die Deckenstütze (10) mittels der einen Montageschraube (83) vorzugsweise elastisch gehalten ist oder dass die Deckenstütze (10) derart elastisch ausgestaltet oder mit einem Gelenk versehen ist, dass sie vorzugsweise nur in der Ebene der sich zumindest teilweise kompensierenden Drehmomente ($F_L$ * L1), ($F_D$ * L2) schwenkbar ist.

18. Deckenstütze (10) nach Anspruch 16 oder 17, **dadurch gekennzeichnet, dass** der erste Abstand (L1) kleiner ist als der zweite Abstand (L2) und/oder dass der Ausleger (5) und/oder das Montageprofil (500, 500'; 550) vorzugsweise teleskopartig verlängerbar sind.

**Fig. 1**

22  21  23

2

211

225  235

**Fig. 2**

32  31  33

3

325  335

341

34

**Fig. 3**

EP 1 594 203 A1

**Fig. 4**

12

Fig. 5

Fig. 6

Fig. 7

Fig. 8

Fig. 9

**Fig. 10**

**Fig. 11**

225, 325

1

1

**Fig. 12**

1

EP 1 594 203 A1

**Fig. 13**

**Fig. 14**

16

**Fig. 15**

EP 1 594 203 A1

Fig. 16

Fig. 16a

$F_L * L1 = F_D * L2$

**Fig. 17**

83 215' 21'

225' 23'

235'

22'

7

500

24' 245' 2'

1'

200

**Fig. 18**

22 215 21 23

225 235

5

24 245

1

500

L2

215' 501

500

**Fig. 19**

A A

1'

10

81

1

211

B B

6

7

5

215

**Europäisches Patentamt**

## EUROPÄISCHER RECHERCHENBERICHT

Nummer der Anmeldung

EP 04 40 5740

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 732 788 A (ZURECON AG) 18. September 1996 (1996-09-18) * das ganze Dokument * ----- | 1 | H02G3/30 |
| A | DE 18 16 413 B1 (RIETH & CO) 15. Januar 1970 (1970-01-15) * Spalte 2, Zeile 25 - Zeile 62; Abbildungen 1,2 * ----- | 1,16 | |
| A | DE 102 16 112 A (ZURECON AG ZUERICH) 21. November 2002 (2002-11-21) * Spalte 4, Zeile 7 - Zeile 38; Abbildung 1 * ----- | 1 | |
| A | GB 2 390 753 A (WEB) 14. Januar 2004 (2004-01-14) * Abbildungen 3,4 * ----- | 1 | |
| A | FR 2 692 643 A (MAVIL) 24. Dezember 1993 (1993-12-24) * Zusammenfassung; Abbildungen 1,2 * ----- | 1 | RECHERCHIERTE SACHGEBIETE (Int.Cl.7) |
| A | DE 30 08 510 A1 (METAALWARENFABRIEK VAN GEEL N.V) 23. Oktober 1980 (1980-10-23) * Seite 9, Absatz 2 - Seite 11, Absatz 1; Abbildungen 6,7 * ----- | 1,16 | H02G |
| A | US 5 118 066 A (PERRAULT ET AL) 2. Juni 1992 (1992-06-02) ----- | | |

Der vorliegende Recherchenbericht wurde für alle Patentansprüche erstellt

| Recherchenort | Abschlußdatum der Recherche | Prüfer |
|---|---|---|
| Den Haag | 30. August 2005 | Lommel, A |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 40 5740

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 0732788 | A | 18-09-1996 | EP | 0732788 A1 | 18-09-1996 |
| DE 1816413 | B1 | 15-01-1970 | AT | 297824 B | 10-04-1972 |
| | | | BE | 742434 A | 04-05-1970 |
| | | | CH | 510344 A | 15-07-1971 |
| | | | FR | 2026762 A5 | 18-09-1970 |
| DE 10216112 | A | 21-11-2002 | DE | 10216112 A1 | 21-11-2002 |
| GB 2390753 | A | 14-01-2004 | KEINE | | |
| FR 2692643 | A | 24-12-1993 | FR | 2692643 A1 | 24-12-1993 |
| | | | EP | 0575269 A1 | 22-12-1993 |
| DE 3008510 | A1 | 23-10-1980 | NL | 7902834 A | 14-10-1980 |
| | | | BE | 881917 A2 | 26-08-1980 |
| | | | SE | 8002508 A | 11-10-1980 |
| US 5118066 | A | 02-06-1992 | KEINE | | |

EPO FORM P0461

Für nähere Einzelheiten zu diesem Anhang : siehe Amtsblatt des Europäischen Patentamts, Nr.12/82